(19) Europäisches Patentamt
European Patent Office
Office européen des brevets

(11) **EP 4 141 382 B1**

(12) **EUROPEAN PATENT SPECIFICATION**

(45) Date of publication and mention
of the grant of the patent:
**19.06.2024   Bulletin 2024/25**

(21) Application number: **22188471.1**

(22) Date of filing: **03.08.2022**

(51) International Patent Classification (IPC):
**G01B 11/275** *(2006.01)*

(52) Cooperative Patent Classification (CPC):
**G01B 11/2755;** G01B 2210/143; G01B 2210/26;
G01B 2210/28

(54) **MEASUREMENT SYSTEM FOR WHEEL ALIGNMENT OF VEHICLES WITH TWO OR MORE AXLES AND RELATED MEASUREMENT METHOD**

MESSSYSTEM ZUR RADAUSRICHTUNGSMESSUNG VON FAHRZEUGEN MIT ZWEI ODER MEHR ACHSEN UND ENTSPRECHENDES MESSVERFAHREN

SYSTÈME DE MESURE D'ALIGNEMENT DE ROUES DE VÉHICULES À DEUX OU PLUSIEURS ESSIEUX ET PROCÉDÉ DE MESURE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2021   IT 202100022529**

(43) Date of publication of application:
**01.03.2023   Bulletin 2023/09**

(73) Proprietor: **Green Gem S.r.l.**
**10031Borgomasino (TO) (IT)**

(72) Inventor: **AIMINO, Felice**
**10031 Borgomasino (TO) (IT)**

(74) Representative: **Boario, Enrico**
**Barzanò & Zanardo Milano S.p.A.**
**Corso Vittorio Emanuele II, 61**
**10128 Torino (IT)**

(56) References cited:
**EP-A2- 1 798 515      US-A- 5 636 016**
**US-A- 5 748 301      US-A1- 2014 176 703**

**Description**

The present invention relates to a measurement system adapted to measure the wheel alignment of vehicles with two or more axles, preferably with four or more wheels, such as, for example, cars, motorcars, tractors and/or trucks adapted to travel on roads, e.g. asphalt roads.

The present invention also relates to a measurement method for determining the wheel alignment of vehicles with two or more axles, preferably with four or more wheels, by using the measurement system according to the present invention.

Several systems and apparatuses are known which are used in car repair shops for measuring and adjusting, tuning, the wheel alignment of vehicles. Such systems and apparatuses were introduced along with cars themselves, but innovations had already been introduced in earlier times in order to improve the service life of moving mechanical members and the comfort of means of transport like wagons and carriages.

Over the years, the mechanical parts of such systems and apparatuses have evolved more slowly than their electronic parts, particularly as to the execution of the measurements necessary for determining the wheel alignment of the vehicle and the process of adjusting the wheel alignment. The state of the art includes, in fact, optical equipment with reference flags, systems comprising electronic components directly coupled to the wheels, and also systems with infrared PSDs or CCDs.

3D systems with on-wheel targets are also known, for determining the wheel alignment, as well as "touchless" systems capable of identifying the position in space of the wheel's rotation plane without using any devices fastened to the vehicle's wheels.

At present, the industry is increasingly focused on diagnosing the vehicle's wheel alignment dynamically, as opposed to statically, with the vehicle in motion. Systems are known, in fact, which comprise high-resolution digital cameras with increasingly high frame rates that make it possible to identify the horizontal and vertical angles of the vehicle's wheels without requiring any preliminary steps. These latter solutions employ image and telemetry analysis algorithms with increasingly capable sensors to obtain measurements that have become more and more accurate, with reduced diagnosis and adjustment times.

Innovative equipment, with associated measurement models/methods, has been developed while neglecting, of course, the application of new technologies to models/methods that were believed to be obsolete, such as, for example, systems comprising measuring heads to be fixed to the wheels and active targets. As a matter of fact, this type of measurement system is now gradually disappearing from the market, since the costs of the new equipment are rapidly approaching those of the old measurement systems.

It must also be pointed out that the current measurement systems that include measuring units or heads fixed to the rims of the vehicle's wheels are so designed that measuring units are fixed to at least two wheels of one axle, each one comprising at least two optical assemblies, which are aligned along axes mutually arranged at 90°. In fact, the known measurement systems carry out partial toe-in measurements concerning an individual wheel, which are then referred to the measurement of the alignment between the measuring units on the same side of the vehicle, after the relationship between partial toe-in measurement and alignment has been established.

Such a solution, which belongs to the current state of the art, implies the presence of an arm supporting the toe-in sensor which can optically pass beyond the tyre of the wheel. Moreover, the measuring unit is levelled with the loads that are typical of the measuring unit itself, e.g. battery, mechanical parts, etc., thus normally requiring a rim clamping system with three or four clamping points, which must also be suitable for bearing the weight of the entire measuring unit, including said arm. Fastening usually occurs by means of support clamps adapted to act upon the wheel rim.

Furthermore, the solutions currently known in the art require that, for every single measuring unit fastened to a wheel, some preliminary set-up operations be carried out prior to starting the measurements. In particular, one preliminary operation that needs to be executed with the measurement systems currently known in the art is levelling each measuring unit. This operation requires time and precision.

It is known from the application US5748301A a geometric inspection of wheeled vehicles is carried out by at least two casings facing each other and each comprising at least one light source and at least one optical receiver located behind a device for defining an image. The image-defining device is sensitive to radiation from the light source of the other opposite casing. The light source of a first casing defines with the optical receiver of a second opposite casing a first active spatial zone. The light source of that second casing defines with the optical receiver of the first casing a second active spatial zone. The two active spatial zones are separated by a space of predetermined width to permit simultaneous operation of the two casings without mutual interference.

It is known from the application US5636016A an apparatus for geometric measurement, particularly for a vehicle with steered wheels or wheels that are only slightly steered or are not steered, of the type comprising two first measuring casings and two second measuring casings from each of which second casings extends a longitudinal arm carrying at its end an angular measuring device. The two first casings are fixed on the steered wheels and the two second casings are secured on the unsteered or only slightly steered wheels, so as to avoid any substantial deviation of the arms during geometric measurement of the vehicle. The first casings are each substantially internal to an imaginary geometrical cylinder with an axis corresponding to the axis of rotation of the steered wheel and of a diameter corresponding to the diameter of the rim of the wheel. The second casings each have an arm which passes through while extending longitudinally of an imaginary geometrical cylinder having an axis corresponding to the axis of rotation of the unsteered or only slightly steered wheel and of a diameter corresponding to the diameter of the rim of the unsteered or only slightly steered wheel.

In general, the present invention aims at solving these and other technical problems by providing an innovative measurement system which, by making reference to the methods employed by systems using optical or CCD technology and on-wheel measuring units, is meant to introduce the latest innovations in the electronic field, thereby modifying the model of the measurement system and speeding up or eliminating any preliminary operations, resulting in lower costs and smaller dimensions of the whole measurement system.

Therefore, the measurement system according to the present invention proves to be innovative as concerns the measurement method, while at the same time being simple, easy to use, economical, and capable of competing, due to its simplicity, with the most advanced measurement systems.

One aspect of the present invention relates to a measurement system having the features set out in the appended claim 1.

A further aspect of the present invention relates to a measurement method having the features set out in the appended claim 10.

Auxiliary features of the system and method are set out in respective dependent claims appended hereto.

The features and advantages of the system and method will become clear and apparent in light of the following description of several possible embodiments thereof, provided herein by way of non-limiting example, as well as from the annexed drawings, wherein:

- Figure 1 shows a schematic top view of a measurement system according to the present invention applied to a vehicle with two axles and four wheels;
- Figures 2A, 2B and 2C show different views of a first possible embodiment of the first measuring unit; in particular, Figure 2A shows the first measuring unit in an axonometric view; Figure 2B shows the first measuring unit in a lateral view; Figure 2C shows the first measuring unit in a front view;
- Figure 3 shows an axonometric view of one possible embodiment of the second measuring unit according to the present invention;

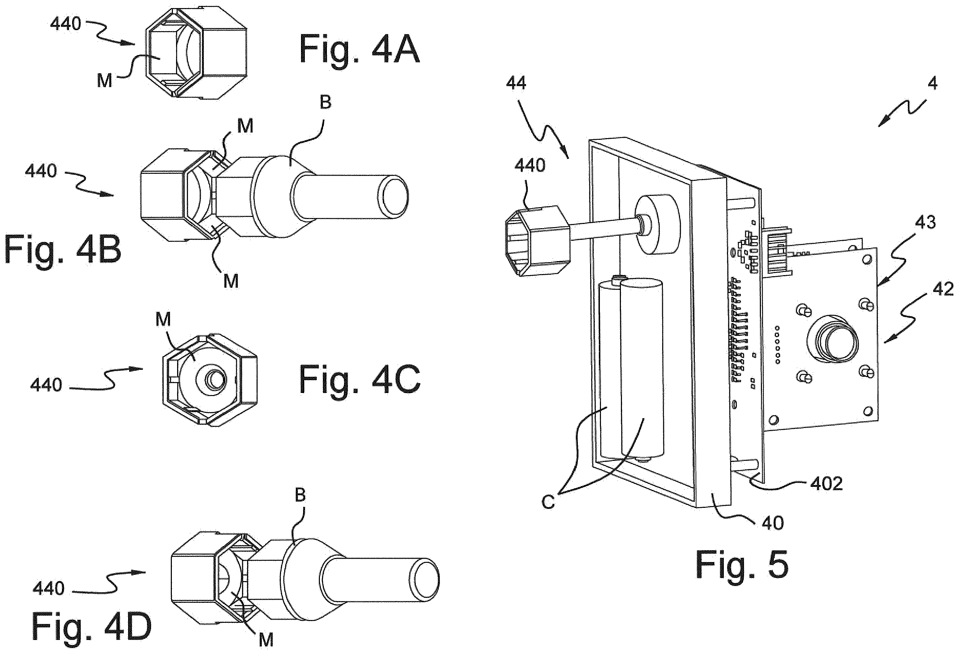

- Figures 4A-4D show two different embodiments of fastening members of one possible embodiment of the system for fastening the first measuring units according to the present invention; in particular, Figures 4A and 4B show a first embodiment, in particular in a perspective front view and a perspective side view together with a bolt, comprising magnets arranged on a plurality of flat faces of the fastening member; Figures 4C and 4D show a second embodiment, in particular in a perspective front view and a perspective side view together with a bolt, comprising a magnet arranged on the bottom of the fastening member;
- Figure 5 shows a second possible embodiment of the first measuring unit according to the present invention, including a fastening system comprising fastening members according to one of the embodiments shown in Figs. 4A-4D;
- Figure 6 shows a first configuration of the measurement system according to the present invention, adapted to calculate at least the total front toe-in, the alignment angles and the track variation relative to a virtual axle, according to the method of the present invention;
- Figure 7 shows a second configuration of the measurement system according to the present invention, adapted to calculate at least the total front toe-in and the total rear toe-in, the alignment angles and the track variation corresponding to the real vehicle, according to the method of the present invention.

With reference to the above-listed figures, reference numeral 3 designates as a whole a measurement system according to the present invention.

Measurement system 3 is adapted for determining the wheel alignment of a vehicle 1 with at least two axles "A".

For the purposes of the present description, the term wheel alignment refers to the set of geometric angles of wheels "W" of a vehicle 1, comprising toe-in, camber, incidence, etc.

For the purpose of the present description, the term axle "A" of a vehicle generally refers to the bar or steering system to which the wheels of a vehicle can be mounted, e.g. to the ends of such bar, and more in general to a straight line that schematizes such bar.

Measurement system 3 according to the present invention comprises a plurality of first measuring units 4. Each first measuring unit 4 is adapted to be fixed to a wheel "W" of vehicle 1. Preferably, a first measuring unit 4 is fixed to each wheel "W" of vehicle 1. Even more preferably, only one first measuring unit 4 is fixed to each wheel "W".

Measurement system 3 according to the present invention further comprises a processing unit 32. Said processing unit 32 is adapted to receive data generated by said plurality of first measuring units 4 and to determine the wheel alignment of vehicle 1 whereon such first measuring units 4 have been associated. In particular, as a function of the data returned by every single first measuring unit 4, said processing unit 32 can determine the wheel alignment of vehicle 1 whereon the measurements are being carried out, in particular using methods that will be specified in more detail hereinafter.

Said first measurement units 4 are of the optical type.

In the preferred embodiment of measurement system 3 according to the present invention, each one of said first measuring units 4 comprises at least one optical assembly 42, preferably a single optical assembly 42. In the same embodiment, system 3 comprises two second measuring units 5. Said two second measuring units 5 are adapted to be placed on a reference plane "XY", e.g. the plane whereon vehicle 1 itself lies. Each second measuring unit 5 is adapted to be arranged on one side, in particular the left-hand side and the right-hand side, of vehicle 1. For example, said reference plane "XY" is a horizontal plane, which may be defined by the ground, or by a hoist on which such vehicle 1 may be placed.

More particularly, said two second measurement units 5 are of the optical type.

More in general, said first measuring units 4 and said second measuring units 5 are distinct and mutually independent.

Each second measuring unit 5 comprises at least two optical assemblies (52, 54), preferably only two, in particular: a first optical assembly 52, preferably only one, is adapted to at least be aligned with another first optical assembly 52 comprised in the other second measuring unit 5, in order to define a virtual axle "V".

For the purposes of the present description, the expression "a first optical assembly 52 aligned with another first optical assembly 52" means that the two optical assemblies are visible to each other to define an axis that joins them, in particular said virtual axle "V".

As aforementioned, said second measuring unit 5 comprises at least one second optical assembly 54, which is adapted to take measurements relative to a respective first measuring unit 4.

In measurement system 3 according to the present invention, said processing unit 32 is adapted to receive also the data generated by said second measuring units 5, and such data are used for determining the wheel alignment of vehicle 1 being subjected to the measurements.

For the purposes of the present description, the term virtual axle "V" refers to an imaginary axle, or a straight line, substantially similar to an axle "A" of vehicle 1. Said virtual axle "V" is used for determining the wheel alignment of vehicle 1.

The present solution makes it possible to simplify the installation of the first measuring units 4 on wheels "W" of vehicle 1 and the setup of measurement system 3 itself, by utilizing a new approach to determining the wheel alignment of vehicle 1 under measurement. In fact, the present invention simplifies said first measuring units 4 and introduces the use of second measuring units 5, distinct and separate from said first measuring units 4, and such second measuring units 5 do not need to be fixed to vehicle 1, thereby simplifying the procedure for installing and setting up measurement system 3. Furthermore, the use of said second measuring units 5 makes it possible to determine the wheel alignment of a vehicle with at least two axles by referring the measurements to a metrological model constituted by at least three axes.

The position of virtual axle "V" in the sequence of axles "A" of vehicle 1 is unimportant for the measurements to be taken. The necessary and sufficient condition for the proper operation of measurement system 3 according to the present invention is that the second optical assemblies 54 can execute the measurement relative to a respective first measuring unit 4 of a real axle "A" of vehicle 1, and preferably also vice versa.

In a preferred, but merely illustrative and non-limiting, embodiment of measurement system 3 according to the present invention, said virtual axle "V", defined by said two second measuring units 5, is located between two axles "A" of vehicle 1, even non-consecutive ones. The present solution makes it possible to simplify the construction of the first measuring units 4, which may each comprise a single optical assembly 42, and the latter can be easily positioned in such a way that it can take measurements relative to another first measuring unit 4 located on another axle "A", in particular on the same side of vehicle 1, while at the same time, if required, taking measurements relative to a respective second measuring unit 5, and vice versa.

As an alternative to positioning said second measuring units between two axles "A" of vehicle 1, said second measuring units 5 may be positioned ahead of, or behind, vehicle 1.

More in general, said virtual axle "V" can be easily positioned outside the area occupied by wheels "W" of the vehicle, thus simplifying the installation of measuring units (4, 5) in comparison with the prior-art solutions.

Preferably, each first optical assembly 52 is adapted to take measurements relative to the other second measuring unit 5, with which it is aligned to define said virtual axle "V" .

In a preferred embodiment of the second measuring units 5, each one of them is so designed that said first optical assembly 52 and said second optical assembly 54 are disposed and calibrated at a mutual angle of 90°, e.g. substantially perpendicular to each other. This implementation solution makes it possible to mutually relate the position in space of left-hand wheels "W" of a vehicle 1 with the position in space of right-hand wheels "W" of the same vehicle 1. In the prior art this function was entrusted to an optical assembly located on an arm connected to the measuring unit fastened to a wheel's rim, resulting in the technical problems that are well known to those skilled in the art.

As aforementioned, the use of such second measuring units 5 makes it possible to simplify the structure of the first measuring units 4.

More in general, in one possible embodiment of measurement system 3 according to the present invention said second measuring units 5 are separate devices, and are adapted to be positioned on any reference plane "XY", which reference plane "XY" may be either the one whereon all wheels "W" of vehicle 1 lie or a plane substantially parallel thereto. This solution makes measurement system 3 easy to use in different places, whether on a floor or on a hoist for a vehicle 1, so that the entire measurement system 3 according to the present invention can be moved quickly and easily.

In one possible, but merely illustrative and non-limiting, embodiment of measurement system 3 according to the present invention, said second measuring units 5 are already integrated into the structure of a measurement plane, such as, for example, a hoist. This solution increases the functionality of a hoist, allowing such hoist to be used also for determining and, if necessary, adjusting the wheel alignment of vehicle 1.

More in general, said processing unit 32 is adapted to process the measured horizontal and vertical angles, which permit determining the characteristic wheel alignment angles of vehicle 1. Said processing unit 32 may be integrated into one or more measuring units (4, 5) of measurement system 3, or may be a separate electronic device.

More in general, said processing unit 32 may have either a centralized configuration, being either integrated into one of the measuring units (4, 5) or a separate external device, or a distributed configuration, e.g. a master/slave configuration, e.g. integrated into more than one measuring units (4, 5).

More in general, said processing unit 32 has a computing unit, such as, for example, a microprocessor and/or a microcontroller, capable of processing the data obtained from the various measuring units (4, 5). Preferably, said processing unit 32 is adapted to compute angles, in particular horizontal and vertical angles, for then determining the camber of each wheel "W", the total toe-in, the alignment angles and the track variation of vehicle 1 under measurement.

Those embodiments in which said processing unit 32 is incorporated into one of measuring units (4, 5) permit reducing the production costs, in that one computing unit can be exploited to perform different functions.

Said processing unit 32 may comprise, or be connected to, a visualization device 34, e.g. a screen or an alphanumeric or graphic display, capable of representing, e.g. graphically, the results emerging from the measurements and from the calculations made by said processing unit 32.

In a preferred embodiment, said visualization device 34 is a portable device, e.g. a PC, a tablet or, generally speaking, any other device capable of displaying numerical data and character strings, which can be easily handled by the user while setting up and using measurement system 3 according to the present invention.

Optionally, said processing unit 32 and said visualization device 34 are arranged inside a mobile trolley as in prior-art solutions.

Advantageously, said processing unit 32 can interface with the user or operator, or with another remote device, e.g. a desktop or notebook PC, or a PC arranged on a mobile trolley, similarly to solutions currently known in the art.

Advantageously, said processing unit 32 can communicate with said measuring units (4, 5), and possibly measuring units (4, 5) can communicate with one another, by radio-wave communication, preferably wireless communication, e.g. using the WiFi, Bluetooth, Bluetooth Low Energy, ZigBee, etc. communication protocols.

For the purposes of the present description, the right-hand side and the left-hand side of a vehicle 1 are, respectively, the right-hand portion and the left-hand portion of a vehicle 1 with reference to its longitudinal axis parallel to the direction of forward travel of the vehicle.

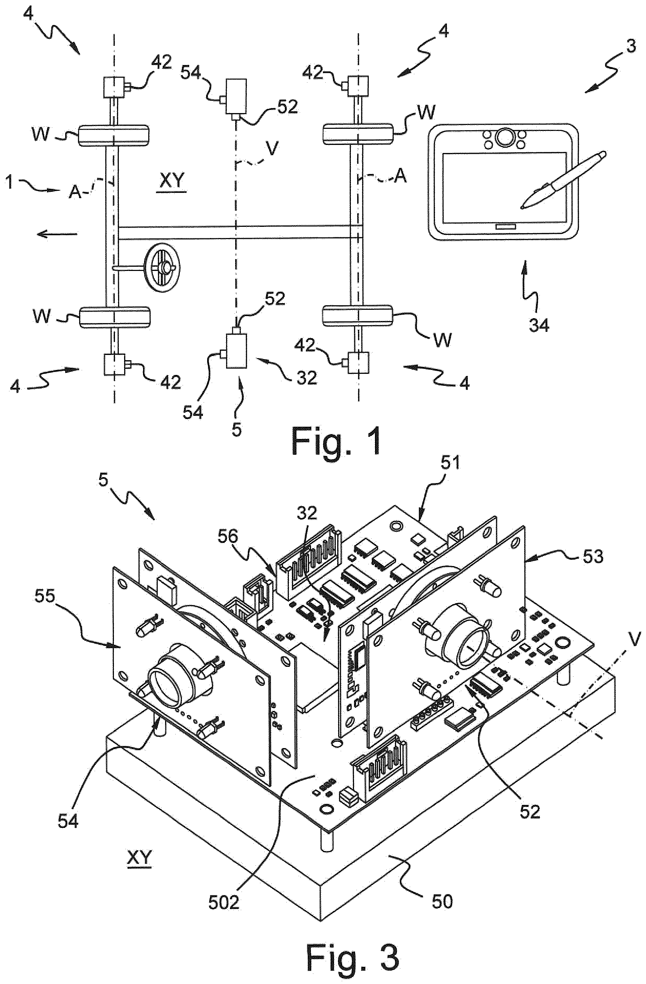

Figure 1 shows a schematic top view of one possible embodiment, which is merely illustrative and non-limiting, of measurement system 3 according to the present invention applied to a vehicle 1 with two axles "A". The Figure shows an embodiment in which to each wheel "W" of vehicle 1 a respective first measuring unit 4 is fixed, each one comprising a single optical assembly 42. In particular, the first measuring units 4 are removably fastened to wheels "W" of vehicle 1. Each first measuring unit 4 is adapted to take measurements relative to another first measuring unit 4 located on a different axle "A" on the same side of vehicle 1.

In the illustrated embodiment there are two second measuring units 5, each one comprising a first optical assembly 52 adapted to be aligned with the corresponding first optical assembly 52 of the other second measuring unit 5, thereby defining a virtual axle "V", and a second optical assembly 54 adapted to take measurements relative to a respective first measuring unit 4, in particular the two second measuring units 5 taking measurements relative to the first measuring units 4 located on front axle "A" of vehicle 1. Both second measuring units 5 are disposed on a reference plane "XY", whereon vehicle 1 lies. Said reference plane "XY" is the ground, e.g. when baseless lifts or inspection pits are used, or alternatively said reference plane "XY" is a hoist, e.g. provided with bases.

In the illustrated embodiment, said processing unit 32 is comprised in the structure of one of the second measuring units 5.

The data of the measurements taken by all measuring units (4, 5) comprised in measurement system 3 according to the present invention are transmitted to processing unit 32, preferably through radio waves. Said processing unit 32 then processes the data generated by measuring units (4, 5) in order to determine the wheel alignment of vehicle 1. The data processed by said processing unit 32 are advantageously processed into images by means of a visualization device 34. Said visualization device 34 is a display, e.g. of a tablet, adapted to interface with the user or operator. Said processing unit 32 may also be adapted to interface with another remote device, not shown.

In a preferred, but merely illustrative and non-limiting, embodiment of measurement system 3 according to the present invention, each first measuring unit 4 comprises a fastening system 44, in turn comprising one or more fastening members 440 adapted to be fastened onto the head of at least one bolt "B" adapted to fasten wheel "W" to a respective hub of vehicle 1.

The present embodiment permits fastening said first measuring unit 4 to a part of vehicle 1, which normally suffers no damage and which has a specific position relative to the structure of wheel "W" and of vehicle 1 itself.

Preferably, the first measuring unit 4 should be fastened to wheel "W" on the uppermost bolt "B" with reference to an axis which is vertical or normal to said reference plane "XY", for each wheel "W" of vehicle 1.

More generally, said first measuring units 4 are designed to be able to oscillate freely, so that they can maintain a direction substantially perpendicular to said reference plane "XY", e.g. the ground.

In order to allow said first measuring unit 4 to be properly positioned and oscillate freely, each first measuring unit 4 is designed with fastening system 44 mounted on bearings, so that it can rotate relative to the remaining part of the first measuring unit 4. Furthermore, said fastening system 44 comprises an encoder 442, e.g. an analogue or digital one. Such a solution permits the first measuring unit 4 to hold a substantially perpendicular position relative to said reference plane "XY", e.g. the ground, without losing its position reference during the rotation, e.g. in case of rotation of wheel "W".

Said encoder 442 is preferably of the magnetic type and may be either analogue or digital, or it may be a tone wheel, provided that the direction of rotation is known. Preferably, said encoder 442 comprises an excitation magnet that supplies the position of fastening system 44 relative to the remaining part of the first measuring unit 4, e.g. relative to a support structure 40 comprised in said first measuring unit 4. Said encoder 442 is adapted to determine the rotations, in particular about the axis of said fastening system 44. Therefore, this solution permits levelling the first measuring unit 4, in particular optical assembly 42 thereof.

In addition, the present solution ensures that said first measuring unit 4, and in particular said optical assembly 42, will stay level without requiring the use of mechanical brakes to be actuated in order to stop the rotation of fastening system 44 relative to the rest of the first measuring unit 4. Moreover, the present solution ensures that the first measuring unit 4 will be substantially perpendicular to the reference plane "XY" even in case it is necessary to prevent the free rotation of fastening system 44 about its axis.

More in general, fastening system 44 according to the present invention permits each first measuring unit 4 to be easily anchored to a respective wheel "W" of the vehicle, because each first measuring unit 4 is lighter, in particular lighter than the prior-art solutions, which used multiple optical assemblies associated with each measuring unit and an arm at the distal end of which there was an optical assembly. Fastening system 44 according to the present invention also makes it possible to easily level the first measuring unit 4.

In measurement system 3 according to the present invention, as already mentioned, due to the use of said second measuring units 5, the construction of said first measuring units 4 is simpler, so that each measuring unit 4 is smaller, lighter and less expensive. Therefore, the present invention makes it possible to avoid the necessity of using bulky systems for fastening the first measuring units 4 to a wheel "W". Furthermore, the present invention also allows reducing the space occupied by the electronic devices because each first measuring unit 4 only needs to be equipped with one optical assembly 42.

In addition, the present invention provides multiple fastening points for fastening each first measuring unit 4 to a wheel "W", since there are a number of bolts "B" to which said first measuring unit 4 can be fastened in a removable manner.

According to one possible embodiment of said fastening system 44, said fastening members 440 have a clamp-shaped conformation. In this embodiment of the first measuring unit 4, the first measuring unit 4 is fastened, by means of the clamp-shaped fastening members 440, to the head of a bolt "B" that secures wheel "W" to the respective hub. The present embodiment permits fastening the first measuring unit 4 to differently sized bolts "B", e.g. 17mm, 19mm and 21 mm, which are the most commonly used sizes.

In a preferred embodiment, said fastening system 44 comprises two fastening members 440, each one having a 120° open angular profile for correctly acting upon the flat faces of the head of a bolt "B". Preferably, a first fastening member 440 is rigidly fixed to a base, while the second fastening member 440 is pivoted, e.g. to said base, in a manner such that it can vary its position, e.g. by oscillating, relative to the other fastening member 440. The present solution further comprises a tightening member for locking the mutual position of said fastening members 440, e.g. a threaded screw fitted with a knob, acting upon the movable second fastening member 440 to lock fastening system 44 on the head of bolt "B". Said tightening member may comprise, as an alternative or in addition to said threaded screw, permanent magnets, e.g. neodymium magnets.

More generally, said fastening system 44 may comprise multiple fastening members 440 adapted to define two or more clamps adapted to act upon two or more respective bolts "B", in particular upon multiple heads of bolts "B".

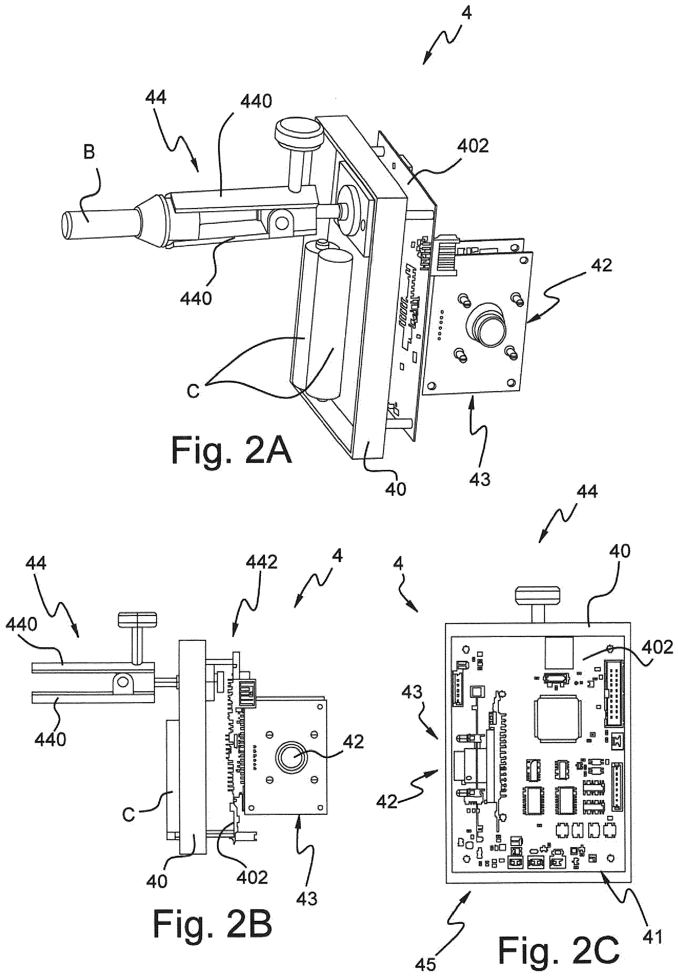

Figures 2A and 2B show a first measuring unit 4 comprising a clamp-type fastening system 44. In the present embodiment, said clamp-type fastening system 44 is designed to adhere to the head of one bolt "B" only. Moreover, the present embodiment permits fastening said first measuring units 4 to 17mm, 19mm and/or 21mm bolts "B", which are the most common bolt sizes employed on vehicles 1, although this embodiment could also be safely and reliably used with bolts "B" of bigger or smaller sizes. In the embodiment shown in Figures 2A and 2B, one can see a first fastening member 440 in an upper position, which has an open profile with an angle of approximately 120°. Such first fastening member 440 is rigidly fixed, e.g. welded, to a base having, for example, a shape that is complementary to that of the first fastening member 440. To the same base a second fastening member 440 is pivotally fastened. In this figure one can also see a tightening member, in particular a threaded screw fitted with a knob, which is adapted to tighten the two fastening members 440 around the head of bolt "B".

More in general, in a possible alternative embodiment of said fastening system 44, said fastening members 440 have a socket-like shape. Such socket-like shape permits fastening member 440 to be coupled to the head of a bolt "B", in particular the head of bolt "B" can be inserted into the housing defined by the cylindrical shape of the socket-like fastening member 440. In this embodiment as well, it is advantageous to couple the socket-shaped fastening member 440 to bolt "B" that is positioned highest along the vertical axis, for each wheel "W" of vehicle 1, so as to allow the first measuring units 4 to oscillate and keep a direction substantially perpendicular to the ground.

Said fastening system 44 may comprise a single socket-shaped fastening member 440 or a plurality of socket-shaped fastening members 440.

The present embodiment requires that said fastening members 440 be appropriately selected according to the size of bolts "B" to which they have to be fastened.

More in general, each individual socket-shaped fastening member 440 advantageously comprises at least one magnet "M" adapted to interact with bolt "B", exploiting its magnetic force to safely fasten said fastening member 440 to said bolt "B". Said magnets "M" are, for example, permanent magnets made of neodymium. Said at least one magnet "M" may be arranged on one or more faces, e.g. flat faces, of the socket-shaped fastening member 440 and/or on the bottom of socket-shaped fastening member 440.

Figures 4A-4D show two different embodiments of fastening members 440 for a possible embodiment of system 44 for fastening the first measuring units 4 of measurement system 3 according to the present invention. In particular, Figures 4A and 4B show a first embodiment of socket-shaped fastening member 440, respectively in a perspective front view and a perspective side view together with a bolt "B". Figure 4A shows socket-shaped fastening member 440, in which one can see a magnet "M" arranged on a flat face of the socket.

Figure 4B shows fastening member 440 from another perspective, wherein a number of magnets "M" are visible which are arranged on two respective flat faces of socket-shaped fastening member 440. From this figure it is possible to understand how such a fastening member 440 interacts with said bolt "B" and how, thanks to magnets "M", it is held in position on the head of bolt "B". In the present embodiment there are at least three magnets "M" arranged on as many faces of socket-shaped fastening member 440.

Figures 4C and 4D show a second embodiment of the socket-shaped fastening member 440, respectively in a perspective front view and a perspective side view together with a bolt "B". Figure 4C shows the socket-shaped fastening member 440 with a magnet "M" arranged on the bottom of said socket-shaped fastening member 440.

Figure 4D shows fastening member 440 from another perspective, wherein one can still see magnet "M" arranged on the bottom of socket-shaped fastening member 440. From this figure it is possible to understand how such a fastening member 440 interacts with said bolt "B" and how, thanks to magnet "M", it is held in position on the head of ubolt "B".

In both embodiments, neodymium magnets "M" are advantageously employed.

More in general, in measurement system 3 according to the present invention said second optical assemblies 54 of the two second measuring units 5 are adapted to take measurements relative to the first measuring units 4 placed on wheels "W" mounted to any one axle "A" of vehicle 1. For example, said first measuring units 4 are the first measuring units 4 located on wheels "W" of the front axle "A", or the first measuring units 4 located on wheels "W" of rear axle "A". Preferably, said axle "A" is the front axle of vehicle 1, in particular the steering axle.

In one possible embodiment of measurement system 3 according to the present invention, said first measuring units 4 and said second measuring units 5 are all powered by a rechargeable battery "C", e.g. enclosed in a respective support structure (40, 50). The present solution permits speeding up the installation and measurement procedures, in that no power cables are required to reach the various measuring units (4, 5). Such a solution allows measurement system 3 according to the present invention to be used anywhere, without necessarily having to be connected to the electric main for supplying power to the devices comprised in measurement system 3 according to the present invention.

Furthermore, such a solution turns out to be particularly advantageous in those embodiments in which said measuring units (4, 5) communicate with processing unit 32 via radio waves, e.g. according to the Bluetooth Low Energy communication protocol. This solution makes it possible to use measurement system 3 according to the present invention anywhere.

In one possible embodiment, said rechargeable batteries "C" are removable from measuring unit (4, 5) to be recharged, or, alternatively, said measuring units (4, 5) comprise a respective connector adapted to be connected to a battery charger, so that said batteries "C" can be recharged locally without having to be removed from measuring unit (4, 5).

In an alternative, but less preferable, embodiment, one or more of said measuring units (4, 5) are powered by means of a cable adapted to conduct electricity from a source to one or more measuring units (4, 5).

Describing now more in detail the construction of one possible, but merely illustrative and non-limiting, embodiment of said measurement system 3 according to the present invention, each first measuring unit 4 comprises: a support structure 40 and a printed circuit board 402. Said printed circuit board 402 is mechanically connected to said support structure 40, being, for example, anchored thereto or, even more preferably, connected thereto by means of spacers. To said printed circuit board 402 said at least one optical assembly 42, preferably a single optical assembly 42, is electrically connected. Preferably, said optical assembly 42 is mechanically and electronically connected to said printed circuit board 402.

Said printed circuit board 402 comprises also further electronic devices which are useful for the operation of the respective measuring unit 4, such as, for example, said processing unit 32, or at least part thereof, or a transceiver device for communicating with processing unit 32 and/or with visualization device 34, electronic filters, safety circuits, etc.

Said first measuring unit 4 further comprises an inclinometer 41. Said inclinometer 41 is electrically connected to said printed circuit board 402. Said inclinometer 41 is adapted to determine the inclination of said first measuring unit 4.

As aforementioned, said first measuring unit 4 comprises a fastening system 44, which is mechanically connected to said support structure 40. More in general, said fastening system 44 is adapted to allow the first measuring unit 4 to be removably fastened to a wheel "W" of vehicle 1, preferably removably fastened to at least one bolt "B".

Preferably, said fastening system 44 is connected to the structure of said support structure 40 by means of bearings to allow the first measuring unit 4 to oscillate, so that it can position itself substantially vertical and perpendicular to the plane whereon wheels "W" of vehicle 1 lie. Preferably, said encoder 442 is electrically connected to said printed circuit board 402.

Said first measuring unit 4 further comprises an interface 45, which is electrically connected to said printed circuit board 402. Said interface 45 is adapted to interface with the user while setting up and/or using the first measuring unit 4.

As aforementioned, said first measuring unit 4 comprises at least one battery "C". Said at least one battery "C" is electrically connected to said printed circuit board 402, so that it can supply power to all the electronic devices connected to said printed circuit board 402. Said at least one battery "C" is positioned in said support structure 40, being preferably housed in said support structure 40.

Moreover, each first measuring unit 4 comprises an optical target 43, preferably a single target 43. Said optical target 43 is adapted to be framed by at least one optical assembly (42, 54) of another measuring unit (4, 5) for the execution of the measurements.

Preferably, said support structure 40 has such a shape and a structure, e.g. parallelepiped, suitable for supporting said printed circuit board 402 and said at least one battery "C". Preferably, said support structure 40 defines a plane parallel to said printed circuit board 402, whereon the various electric and electronic devices are connected. Such a support structure 40 also performs a protection function for safeguarding both said battery "C" and said printed circuit board 402.

Advantageously, said support structure 40 is closed by means of covers (not shown) adapted to suitably protect and prevent access to the devices included in the first measuring unit 4.

In one possible embodiment, said optical assembly 42 and said optical target 43 are disposed on a plane perpendicular to the plane defined by said printed circuit board 402. In an alternative embodiment, said optical assembly 42 and said optical target 43 are disposed on a plane parallel to, or corresponding with, the plane defined by said printed circuit board 402.

Preferably, said first measuring unit 4 is structured in a manner such that said printed circuit board 402 is fixed to a first face of said support structure 40; while said at least one battery "C" is fixed to the other face of said support structure 40. Preferably, to the same face of the support structure 40 said fastening system 44 is mechanically connected.

In one possible embodiment of measurement system 3 according to the present invention, said optical assembly 42 of the first measuring unit 4 may be constructed using CCD, C-MOS or Time of flight (ToF) technology, and may be of the axial, two-dimensional or three-dimensional type.

In one possible embodiment of measurement system 3 according to the present invention, said inclinometer 41 is an analogue or digital inclinometer, and consists of one or more, preferably at least two, single-axis inclinometers, or one dual-axis inclinometer, or one three-axis inclinometer.

In a preferred embodiment of measurement system 3 according to the present invention, said optical assembly 42 is a two-dimensional camera, e.g. a 10Mpixel one. In the same embodiment, said inclinometer 41 is at least a dual-axis inclinometer, e.g. a digital one, whether as a single device or as a combination of two single-axis inclinometers.

Preferably, said interface 45 comprises a keyboard, e.g. having one or more keys (not shown) adapted to, for example, turn on, turn off and configure the operation of said first measuring unit 4. In addition, said interface 45 comprises one or more visual feedback elements, e.g. one or more LEDs, adapted to provide visual feedback about at least the state of the individual measuring unit 4, e.g. indicating whether such first measuring unit 4 is on or off, and possibly also to indicate the charge status of said at least one battery "C", e.g. by means of one or more LEDs.

More in general, said visualization device 34 can provide a user interface function for each one of the first measuring units 4, being able to check and/or obtain information about each first measuring unit 4.

Preferably, said optical target 43 comprises at least one coloured or infrared LED source. Preferably, said target 43 comprises a plurality of LED sources arranged in space according to a known geometric shape, preferably a square, e.g. along the perimeter of said square, preferably at the corners thereof.

In an even more preferable embodiment, said optical assembly 42 is positioned at the centre of the optical target 43, e.g. at the centre of the square defined by the LED sources, e.g. infrared ones. This implementation solution makes it possible to further reduce the dimensions and space occupation of said first measuring unit 4. Such a configuration also allows the two first measuring units 4 located on the same side of the vehicle 1 to take measurements simultaneously.

More generally, in the embodiment in which said optical target 43 comprises a plurality of LED sources, e.g. infrared ones, e.g. four infrared LEDs, each LED source represents a separate target, thus ensuring higher measurement accuracy since a plurality of measurements can be taken at the same time, e.g. four measurements at the same time, using the same acquired image of optical assembly 42.

Figure 2A shows a first illustrative and non-limiting embodiment of the first measuring unit 4 in an axonometric view. In this figure one can see a support structure 40 adapted to support the other components of the first measuring unit 4. To a first face of said support structure 40 a printed circuit board 402 is constrained through the interposition of spacers, which carries the electric and electronic circuits of the first measuring unit 4.

On the opposite face of said support structure 40 two rechargeable batteries "C" are positioned, for supplying power to all the electric and electronic devices included in the first measuring unit 4.

To the same support structure 40 the clamp-shaped fastening system 44 is fixed by means of a double flanged bearing, which system comprises two fastening members 440, which are adapted to be clamped onto the head of a bolt "B".

A single optical assembly 42, in the form of a camera, e.g. a two-dimensional camera, is electronically and mechanically connected on said printed circuit board 402. Around said optical assembly 42 there is a single optical target 43, which comprises four infrared LEDS arranged according to a square pattern.

Said optical assembly 42 and said optical target 43 lie on a plane perpendicular to the plane defined by said printed circuit board 402.

Figure 2B shows a side view of the first measuring unit 4 of Figure 2A. In this figure one can see that said printed circuit board 402 is arranged parallel to support structure 40, kept at a distance from a face of the latter by spacers. Said batteries "C" are housed on the opposite face of support structure 40. To the same support structure clamp-shaped fastening system 44 is fixed by means of a double flanged bearing, which system comprises two fastening members 440 adapted to be clamped onto the head of a bolt.

Figure 2B also shows an encoder 442, e.g. an analogue one, comprising an excitation magnet for determining the position of fastening system 44 relative to support structure 40, in particular around the axis of the same fastening system 44. The present solution allows the first measuring unit 4 to oscillate freely, staying in a position substantially level and perpendicular to the ground, independently of the rotation of wheel "W" or of fastening system 44, to permit fastening such first measuring unit 4 to at least one bolt "B" of wheel "W". Said encoder 442 is electrically connected to said printed circuit board 402.

Figure 2B also clearly shows an embodiment of clamp-shaped fastening system 44, with upper fastening member 440 having a 120° open angular profile, welded to a base having a complementary shape towards the angular profile. A second fastening member 440 is pivoted to the lower part of the base. In the same figure one can see a threaded screw fitted with a knob, which allows tightening both fastening members 440 around the head of a bolt. In Figure 2B one can also see the mutual positioning of single optical assembly 42 and single optical target 43 comprising four infrared LEDs. The figure also shows the positioning of optical assembly 42 and of optical target 43 on a plane substantially perpendicular to the plane defined by said printed circuit board 402 and by support structure 40.

Figure 2C shows the first measuring unit 4 of Figures 2A and 2B in a front view. This figure mostly shows printed circuit board 402 secured to support structure 40. The following electronic devices are mechanically and electronically connected on said printed circuit board 402: an inclinometer 41, an interface 45, in particular only the circuit associated therewith, since the keys and the visual feedback elements are not shown, a single optical assembly 42, and a single optical target 43.

Figure 5 shows a second possible embodiment of the first measuring unit 4. This embodiment comprises a fastening system 44 comprising a socket-shaped fastening member 440 according to one of the embodiments shown in Figures 4A-4D. In this figure one can see a support structure 40. To a first face of said support structure 40 a printed circuit board 402 is constrained, through the interposition of spacers, which carries the electric and electronic circuits of the first measuring unit 4.

On the opposite face of said support structure 40 two rechargeable batteries "C" are positioned, for supplying power to all the electric and electronic devices included in the first measuring unit 4.

To the same support structure 40 socket-shaped fastening system 44 is fixed by means of a double flanged bearing, which comprises magnets adapted to ensure the proper coupling to the head of a bolt. On said printed circuit board 402 a single optical assembly 42, in the form of a camera, e.g. a two-dimensional one, is electronically and mechanically connected. Around said optical assembly 42 there is a single optical target 43, which comprises four infrared LEDs disposed in a square fashion. Said optical assembly 42 and said optical target 43 lie on a plane perpendicular to the plane defined by said printed circuit board 402.

More generally, the measurements taken between two first measuring units 4, fastened to at least one bolt "B" of a respective wheel "W" on one side of a vehicle 1, allow determining the horizontal alignment angle, e.g. by means of said processing unit 32.

Said horizontal alignment angle is used, e.g. by said processing unit 32, for determining the partial toe-in angle of each wheel "W" of vehicle 1.

More in general, once the first measuring units 4 have been fastened to at least one bolt "B" of a respective wheel "W", it is necessary to carry out a run-out procedure, which is specific and different from the procedures employed by prior-art measurement systems. In prior-art solutions, in fact, run-out is normally mostly or only due to imperfections of the wheel rim and possibly to incorrect fastening of the measuring unit to the wheel rim. In the present invention, on the contrary, the run-out procedure must be considered with reference to the first measuring unit 4, and in particular to the optical assembly 42 and the optical target 43, since said fastening system 44 is adapted to be fixed to at least one bolt "B". This procedure will be described in detail below.

Describing now more in detail the construction of one possible, but merely illustrative and non-limiting, embodiment of said measurement system 3 according to the present invention, each second measuring unit 5 comprises: a support structure 50 and at least one printed circuit board 502. Said printed circuit board 502 is mechanically connected to said support structure 50, being, for example, anchored thereto or, even more preferably, connected thereto by means of spacers.

To said printed circuit board 502 said two optical assemblies (52, 54) are electrically connected. Preferably, said first optical assembly 52 and said second optical assembly 54 are mechanically and electronically connected on said printed circuit board 502. Said printed circuit board 502 comprises also further electronic devices useful for the operation of the second measuring unit 5, e.g. said processing unit 32, or at least part thereof, or a transceiver device for communicating with the processing unit 32 and/or with the visualization device 34, electronic filters, safety circuits, etc.

Said second measuring unit 5 further comprises an inclinometer 51. Said inclinometer 51 is electrically connected to said printed circuit board 502. Said inclinometer 51 is adapted to determine the inclination of said second measuring unit 5.

Said second measuring unit 5 further comprises a first optical target 53 adapted to be framed by the first optical assembly 52 of the other second measuring unit 5 at least for defining said virtual axle "V".

The combination of the first optical assembly 52 and the first optical target 53 of the two second measuring units 5 permits defining said virtual axle "V". The combination of the first optical assembly 52 and the first optical target 53 also provides a very accurate alignment, because the measurements are taken by each one of said second measuring units 5, and in particular by each first optical assembly 52, with reference to the opposite first optical target 53.

In one possible embodiment, said first optical assembly 52 and said first optical target 53 lie on a plane perpendicular to the plane defined by said printed circuit board 502.

In an alternative embodiment, said first optical assembly 52 and said first optical target 53 are disposed on a plane parallel, or corresponding with, the plane defined by said printed circuit board 502. Said second measuring unit 5 further comprises a second optical target 55 adapted to be framed by at least one optical assembly 42 of a first measuring unit 4 for the execution of the measurements.

In one possible embodiment, said second optical assembly 54 and said second optical target 55 are disposed on a plane perpendicular to the plane defined by said printed circuit board 502.

In an alternative embodiment, said second optical assembly 54 and said second optical target 55 are disposed on a plane parallel, or corresponding with, the plane defined by said printed circuit board 502.

As aforementioned, in each one of the second measuring units 5 said first optical assembly 52 and said second optical assembly 54 are disposed and calibrated at a mutual angle of 90°, i.e. substantially perpendicular to each other.

In one possible embodiment, said first optical assembly 52, said second optical assembly 54 and said printed circuit board 502 lie on mutually perpendicular planes.

Each second measuring unit 5 further comprises an interface 56. Said interface 56 is electrically connected to said printed circuit board 502. Said interface 56 is adapted to interface with the user while setting up and/or using the second measuring unit 5.

Advantageously, said second measuring unit 5 comprises at least one rechargeable battery "C". Said at least one battery "C" is electrically connected to said printed circuit board 502, so that it can supply power to all the electronic devices connected to said printed circuit board 502. Said at least one battery "C" is positioned in said support structure 50, being preferably housed in said support structure 50.

Preferably, said support structure 50 has such a shape and a structure, e.g. parallelepiped, suitable for supporting said printed circuit board 502 and said at least one battery "C". Preferably, said support structure 50 defines a plane parallel to said printed circuit board 502, whereon the various electric and electronic devices are connected. Such a support structure 50 also performs a protection function for safeguarding both said battery "C" and said printed circuit board 502.

Advantageously, said support structure 50 is closed by means of covers (not shown) adapted to suitably protect and prevent access to the devices included in the second measuring unit 5.

Preferably, said second measuring unit 5 is structured in a manner such that said printed circuit board 502 is fixed to a first face of said support structure 50, while the other face is adapted to be laid on a reference plane "XY". This latter face of said support structure 50 is adapted to house said at least one battery "C", e.g. in a suitable housing.

In one possible embodiment of measurement system 3 according to the present invention, each optical assembly (52, 54) of the second measuring unit 5 may be constructed using CCD, C-MOS or Time of flight (ToF) technology, and may be of the linear, two-dimensional or three-dimensional type.

In one possible embodiment of measurement system 3 according to the present invention, said inclinometer 51 is an analogue or digital inclinometer, and consists of one or more, preferably at least two, single-axis inclinometers, or one dual-axis inclinometer, or one three-axis inclinometer.

In a preferred embodiment of measurement system 3 according to the present invention, said optical assembly (52, 54) of the second measuring unit 5 is a two-dimensional camera, e.g. a 10Mpixel one. In the same embodiment, said inclinometer 51 is at least a dual-axis inclinometer, e.g. a digital one, whether as a single device or as a combination of two single-axis inclinometers.

Preferably, said interface 56 comprises a keyboard, e.g. having one or more keys (not shown) adapted to, for example, turn on, turn off and configure the operation of said second measuring unit 5. In addition, said interface 56 comprises one or more visual feedback elements, e.g. one or more LEDs, adapted to provide visual feedback about at least the state of the individual second measuring unit 5, e.g. indicating whether such second measuring unit 5 is on or off, and possibly also to indicate the charge status of said at least one battery "C", e.g. by means of one or more LEDs.

More in general, said visualization device 34 can provide a user interface function for each one of said second measuring units 5, being able to check and/or obtain information about each second measuring unit 5.

In the preferred embodiment, each optical target (53, 55) comprises at least one coloured or infrared LED source. Preferably, each optical target (53, 55) comprises a plurality of LED sources arranged in space according to a known geometric shape, preferably a square, e.g. along the perimeter of said square, preferably at the corners thereof.

In an even more preferable embodiment, said first optical assembly 52 is positioned at the centre of the first optical target 53, e.g. at the centre of the square defined by the LED sources, e.g. infrared ones.

In the same embodiment, said second optical assembly 54 is positioned at the centre of the second optical target 55, e.g. at the centre of the square defined by the LED sources, e.g. infrared ones.

This implementation solution makes it possible to reduce the dimensions and space occupation of said second measuring unit 5. Such a configuration permits the two second measuring units 5 located on both sides of vehicle 1 to take measurements simultaneously with said first optical assembly 52 and said first optical target 53. On the same principle, as concerns said second optical assembly 54 and said second optical target 55, such a configuration permits the second measuring unit 5 and a corresponding first measuring unit 4, in particular located on the same side of vehicle 1, to take measurements simultaneously.

More generally, in the embodiment wherein said optical targets (53, 55) comprise a plurality of LED sources, e.g. four LEDs, e.g. infrared ones, each LED source represents a separate target, thus ensuring higher measurement accuracy since a plurality of measurements, e.g. four measurements, can be taken at the same time using the same acquired image of the corresponding optical assembly (42, 54).

Figure 3 shows an axonometric view of one possible embodiment of a second measuring unit 5 according to the present invention. By means of two second measuring units 5, e.g. located on both sides of a vehicle 1, a virtual axle "V" can be defined, so that it is possible to mutually determine the respective horizontal angle of inclination of one second measuring unit 5 relative to the other, and also, for each side of vehicle 1, the angles of the wheel, in particular the horizontal and/or vertical angles of wheel "W" mounted to an axle "A", e.g. either to the front axle, as schematically illustrated in Figure 1, or to the rear axle.

In Figure 3 a support structure 50 is visible, which is adapted to support the other components of the second measuring unit 5. On a first face of said support structure 50, a printed circuit board 502 is constrained through the interposition of spacers, whereon the electric and electronic circuits of the second measuring unit 5 are provided.

On the opposite face of said support structure 50 rechargeable batteries can advantageously be positioned for supplying power to all the electric and electronic devices included in the second measuring unit 5. This latter face of support structure 50 is adapted to lie on said reference plane "XY".

On said printed circuit board 502, the first optical assembly 52, in the form of a camera, e.g. a two-dimensional camera, is electronically and mechanically connected, around which the first optical target 53 is arranged, which comprises four infrared LEDS disposed in a square fashion.

On the same printed circuit board 502 also the second optical assembly 54, in the form of a camera, e.g. a two-dimensional camera, is electronically and mechanically connected, around which the second optical target 55 is arranged, which comprises four infrared LEDS disposed in a square fashion.

Said first optical assembly 52 and said first optical target 53 lie on a plane perpendicular to the plane whereon said second optical assembly 54 and said second optical target 55 lie. Moreover, the planes whereon said first optical assembly 52 and said second optical assembly 54 lie are in turn perpendicular to the plane defined by said printed circuit board 502. Figure 3 also shows how said printed circuit board 502 is secured to support structure 50. The following electronic components are mechanically and electronically connected on said printed circuit board 502: an inclinometer 51; an interface 56, in particular the circuits associated therewith, since the keys and the visual feedback elements are not shown, the first optical assembly 52, the second optical assembly 54, and the corresponding optical targets (53, 55). Advantageously, said processing unit 32 is electrically connected on the printed circuit board 502.

As aforementioned, said second measuring unit 5 comprises no fastening systems adapted to fasten the measuring unit to wheel "W" of vehicle 1, in that the second measuring unit 5 according to the present invention is adapted to lie on said reference plane "XY".

Compared with the measurement systems currently known in the art, measurement system 3 according to the present invention makes it possible to implement a different measurement method for determining the wheel alignment of a vehicle 1. In fact, the measurement method for determining the wheel alignment of a vehicle 1 with two or more axles "A" and with four or more wheels "W" according to the present invention comprises the following steps, preferably carried out in succession:

- providing a measurement system 3 according to the present invention;
- fastening a first measuring unit 4 to each wheel "W" of vehicle 1;
- positioning said second measuring units 5 on a reference plane "XY" whereon vehicle 1 can lie;
- aligning said two second measuring units 5 in order to define a virtual axle "V";
- executing a run-out procedure for each wheel "W" by means of said first measuring units 4, determining the vertical run-out and the horizontal run-out;
- determining the horizontal and vertical angles of the first measuring units 4 positioned on a first axle "A" and of the two second measuring units 5;
- calculating the total toe-in, the alignment angles and the track variation corresponding to the angles determined in the previous step;
- determining the horizontal and vertical angles of the first measuring units 4 positioned on a first axle "A" and of the first measuring units 4 positioned on a second axle "A";
- calculating the total toe-in, the alignment angles and the track variation corresponding to real vehicle 1.

The method according to the present invention envisages that, if vehicle 1 has more than two real axles "A", the procedure can be repeated for additional axles "A" by moving each time only one pair of measuring units (4, 5) belonging to one axle (A, V), in particular by moving only said second measuring units 5.

More in detail, during the step of fastening a first measuring unit 4 to each wheel "W" of vehicle 1 the first measuring units 4 are fastened to at least one bolt "B" of corresponding wheel "W". In order to carry out this step, it is possible to implement a fastening system 44 for fastening the first measuring unit 4 designed in accordance with one of the embodiments previously described herein.

As to the step of positioning said second measuring units 5, such step may be carried out prior to the step of fastening a first measuring unit 4 to each wheel "W" of the vehicle 1, or both steps may be carried out simultaneously, e.g. in parallel.

The step of aligning said two second measuring units 5 requires that the respective first optical assemblies 52 be so disposed as to face towards the corresponding first optical targets 53, e.g. so that they are visible to each other, for the purpose of determining any horizontal angle of inclination and/or vertical angle of inclination of the two second measuring units 5.

During the step of executing a run-out procedure for each wheel "W", several measurements and calculations are carried out which are dictated by the previously described fastening system 44 employed for fastening the first measuring unit 4 to a wheel "W". Said calculations are made, for example, by said processing unit 32, or by a computing unit included in each first measuring unit 4, which computing unit is adapted to make such calculations, whether totally or partly, and send the result to said processing unit 32.

Preferably, said run-out procedure is a push-type run-out procedure.

Getting into more detail: the vertical camber angle of each wheel "W" is measured by inclinometer 41 located on printed circuit board 402 included in each first measuring unit 4. This angle must be corrected by compensating it with the respective run-out, as in prior-art measurement systems.

In order to determine the alignment of wheels "W", since the focal points or targets of optical target 43 used for measuring the alignment are constrained to wheel "W" in front of the lens of the camera of optical assembly (42, 54) that is taking the measurement, in a "push-type run-out procedure" this implies that, compared with the normal run-out procedure where the focal points are fixed, the focal points or targets will move on the horizontal angle according to a sinusoidal function dependent on the angle of wheel "W" to which the optical targets 43 have been fastened.

This implies that the run-out calculation can be generally represented by the following formula:

$$\texttt{Ax = Ao + Fao * sin}(\alpha + \texttt{x}) \texttt{ + Fpo * sin}(\beta + \texttt{y})$$

where: **Ax** is the value of the alignment sensor in the position **x**; **Ao** is the nominal value of optical assembly 42 in the absence of run-out, which must be determined; **Fao** is the value of the run-out due to the wheel rim, measured by the camera; $\alpha$ is the run-out angle relative to encoder 442 connected to fastening system 44; **x** is the angular value of encoder 442 of fastening system 44; **Fapo** is the value of the run-out due to optical targets 43 on the opposite first measuring unit 4; $\beta$ is the run-out angle relative to encoder 442 of fastening system 44 of the opposite first measuring unit 4; **y** is the angular value of encoder 442 of fastening system 44 of the opposite first measuring unit 4.

Still in the push-type run-out procedure, since the four wheels "W" move simultaneously, angle $\beta$ and value **y** can be referred to the reference system of the respective first measuring unit 4. Moreover, since both vectors **Fao** and **Fpo** have the same pulsation and the same position increment following the rotation of wheels "W", in particular of both wheels "W" of the same axle "A", their sum is reduced to a vectorial sum. Therefore, the above formula can be re-written as follows:

$$\texttt{Ax = Ao + Fbo * sin}(\delta + \texttt{x})$$

where:

$$\texttt{Fbo * sin}(\delta + \texttt{x}) \texttt{ = Fao * sin}(\alpha + \texttt{x}) \texttt{ + Fpo * sin}(\beta + \texttt{y}).$$

Furthermore, in the embodiment in which each optical assembly (42, 54) is an at least two-dimensional camera, it is also possible to, in addition to determining the horizontal angle as previously specified, measure the vertical angle existing between the respective optical targets (43, 55) of the two optical assemblies (42, 54).

In vehicle 1, the value of vertical run-out **Fv** is normally, by construction, much greater than horizontal run-out **Fo.**

Continuing the analysis of the steps of the method, the step of executing the run-out procedure is preferably followed by a step of determining horizontal and vertical angles. During the step of determining horizontal and vertical angles by means of optical assemblies (42, 54) of the respective measuring units (4, 5) relative to the corresponding optical targets (43, 55), some horizontal and vertical angles are determined between the first measuring units 4 positioned on an axle "A", e.g. the steering front axle, and the two second measuring units 5, which are advantageously located between the two axles "A" of vehicle 1.

The step of determining horizontal and vertical angles is followed by the step of calculating the total toe-in.

This step calculates, e.g. by means of processing unit 32, the total toe-in, the alignment angles and the track variation corresponding to the angles determined in the step of determining horizontal and vertical angles between the first measuring units 4 positioned on an axle "A", e.g. the front axle or the rear axle, and the two second measuring units 5, which are advantageously positioned between the two axles "A" of vehicle 1.

After the above steps, or in parallel with the previously-described step of determining horizontal and vertical angles, a step of determining horizontal and vertical angles of the first measuring units 4 positioned on a first axle "A" of vehicle 1 and of the first measuring units 4 positioned on a second axle "A" of the same vehicle 1 is carried out.

In this step, the horizontal and vertical angles are determined by means of optical assemblies 42 included in the various first measuring units 4, in particular the two first measuring units 4 positioned on wheels "W" of front axle "A" and the two first measuring units 4 positioned on wheels "W" of rear axle "A". During this step, the optical assemblies 42 measure the angles relative to optical target 43 included in the first measuring unit positioned on the other axle "A" of the vehicle.

# EP 4 141 382 B1

After the above steps, or in parallel with the previously-described step of calculating the toe-in, the step of calculating the total toe-in is carried out, wherein the total toe-in, the alignment angles and the track variation corresponding to the real vehicle are calculated, e.g. by said processing unit 32, based on measurements taken on the first measuring units 4 fastened to wheels "W" of two real axles "A" of vehicle 1.

Therefore, this step makes it possible to mutually relate the geometric axes of the two above-mentioned measurement systems, and then refer the real horizontal angles of wheels "W" to a single reference system, in which it is assumed that the geometric axis of the vehicle has an angle of rotation equal to zero, considering the theoretical direction of travel.

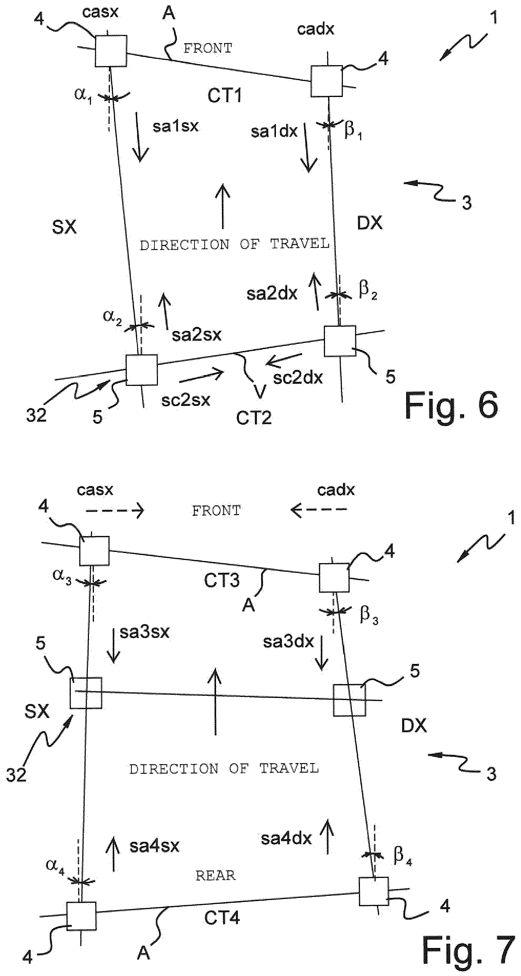

More specifically, as concerns the various steps of determining horizontal and vertical angles and calculating the toe-in previously described herein, the following will describe in detail, by way of non-limiting example, the principal mathematical operations of such geometric calculations. In particular, reference will be made, by way of non-limiting example, to Figure 6 and Figure 7 for immediate visual feedback.

For easier identification, a plurality of measurements concerning the measured angles are defined as follows:

**sa1sx:** measurement of the left-hand alignment sensor of the front axle relative to the virtual axle, in particular of optical assembly 42 of the first measuring unit 4 positioned on the front axle "A" on the left-hand side relative to the second optical target 55 of the second measuring unit 5 that defines virtual axle "V" on the left-hand side;

**sa1dx:** measurement of the right-hand alignment sensor of the front axle relative to the virtual axle, in particular of optical assembly 42 of the first measuring unit 4 positioned on front axle "A" on the right-hand side relative to the second optical target 55 of the second measuring unit 5 that defines virtual axle "V" on the right-hand side;

**sc2sx:** measurement of the left-hand toe-in sensor of the virtual axle, in particular of the first optical assembly 52 of the second measuring unit 5 on the left-hand side relative to the first optical target 53 of the second measuring unit 5 on the right-hand side;

**sc2dx:** measurement of the right-hand toe-in sensor of the virtual axle, in particular of the first optical assembly 52 of the second measuring unit 5 on the right-hand side relative to the first optical target 53 of the second measuring unit 5 on the left-hand side;

**sa2sx:** measurement of the left-hand alignment sensor of the virtual axle, in particular of the second optical assembly 54 of the second measuring unit 5 that defines virtual axle "V" on the left-hand side relative to optical target 43 of the first measuring unit 4 on the left-hand side of front axle "A";

**sa2dx:** measurement of the right-hand alignment sensor of the virtual axle, in particular of the second optical assembly 54 of the second measuring unit 5 that defines virtual axle "V" on the right-hand side relative to optical target 43 of the first measuring unit 4 on the right-hand side of front axle "A";

**sa3sx:** measurement of the left-hand alignment sensor of the front axle relative to the rear axle, in particular of optical assembly 42 of the first measuring unit 4 positioned on front axle "A" on the left-hand side relative to optical target 43 of the first measuring unit 4 positioned on rear axle "A" on the left-hand side;

**sa3dx:** measurement of the right-hand alignment sensor of the front axle relative to the rear axle, in particular of optical assembly 42 of the first measuring unit 4 positioned on front axle "A" on the right-hand side relative to optical target 43 of the first measuring unit 4 positioned on rear axle "A" on the right-hand side;

**sa4sx:** measurement of the left-hand alignment sensor of the rear axle, in particular of the optical assembly 42 of the first measuring unit 4 positioned on rear axle "A" on the left-hand side relative to optical target 43 of the first measuring unit 4 positioned on front axle "A" on the left-hand side;

**sa4dx:** measurement of the right-hand alignment sensor of the rear axle, in particular of the optical assembly 42 of the first measuring unit 4 positioned on the rear axle "A" on the right-hand side relative to optical target 43 of the first measuring unit 4 positioned on the front axle "A" on the right-hand side.

Based on the above measurements, the following angles are determined, e.g. by said processing unit 32:

$\alpha$**1:** left-hand front angle relative to virtual axle "V", in particular the angle between optical assembly 42 of the first measuring unit 4 positioned on front axle "A" on the left-hand side and the second optical target 55 of the second measuring unit 5 on the left-hand side that defines virtual axle "V";

$\beta$**1:** right-hand front angle relative to virtual axle "V", in particular the angle between optical assembly 42 of the first measuring unit 4 positioned on front axle "A" on the right-hand side and the second optical target 55 of the second measuring unit 5 on the right-hand side that defines virtual axle "V";

$\alpha$**2:** left-hand virtual angle, in particular the angle between the second optical assembly 54 of the second measuring unit 5 that defines virtual axle "V" on the left-hand side and optical target 43 of the first measuring unit 4 on the left-hand side positioned on front axle "A";

$\beta$**2:** right-hand virtual angle, in particular the angle between the second optical assembly 54 of the second measuring unit 5 that defines virtual axle "V" on the right-hand side and optical target 43 of the first measuring unit 4 on the

14

right-hand side positioned on front axle "A";

α3: left-hand front angle relative to the rear axle, in particular the angle between the optical assembly 42 of the first measuring unit 4 positioned on front axle "A" on the left-hand side and optical target 43 of the first measuring unit 4 positioned on rear axle "A" on the left-hand side;

β3: right-hand front angle relative to the rear axle, in particular between the optical assembly 42 of the first measuring unit 4 positioned on front axle "A" on the right-hand side and optical target 43 of the first measuring unit 4 positioned on rear axle "A" on the right-hand side.

Based on the above measurements, the following angles are also calculated, e.g. by said processing unit 32:

**CT1:** total toe-in of front axle "A";
**CT2:** total toe-in of virtual axle "V";
**vcav:** front/virtual track variation;
**vcpv:** rear/virtual track variation;

**vca:** front track variation;
**vcp:** rear track variation;
**casx:** left-hand front partial toe-in;
**cadx:** right-hand front partial toe-in;
**cpsx:** left-hand rear partial toe-in;
**cpdx:** right-hand rear partial toe-in.

Particular reference will now be made to Figure 6, which shows a first configuration of the measurement system 3 for measuring some wheel alignment angles of a vehicle 1, which includes two first measuring units 4 fastened to wheels "W" of front axle "A" and two second measuring units 5 adapted to define virtual axle "V", wherein "SX" indicates the left-hand side of vehicle 1 and "DX" indicates the right-hand side of vehicle 1. In Figure 6 it is also possible to identify the direction of travel of vehicle 1. Le illustrated measuring units (4, 5) communicate with processing unit 32 to determine at least the above-mentioned wheel alignment angles. In the illustrated embodiment, said processing unit 32 is incorporated into the left-hand second measuring unit 5.

In more detail, the following calculations are made in order to determine the track variation of the front/virtual axles and the total toe-in of virtual axle "V":

$$sc2sx + sc2dx = CT2$$

$$sa2sx + sa2dx - CT2 = \alpha2 + \beta2$$

$$vcav = (\alpha2 + \beta2)/2$$

Supposing also that optical assemblies (42, 52, 54) and optical targets (43, 53, 55) have all been properly calibrated, it is assumed that vcav = vcpv.

In light of the above, it is possible to determine the total toe-in of the front axle "A" by making the following calculations:

casx = sa1sx - vcav (with the reference axis defined by the first measuring unit 4 on the front axle and by the second measuring unit 5);

cadx = saldx - vcav (with the reference axis defined by the first measuring unit 4 on the front axle and by the second measuring unit 5);

$$\textbf{CT1} = casx + cadx$$

Particular reference will now be made to Figure 7, which shows a second configuration of measurement system 3 for measuring some wheel alignment angles of a vehicle 1, which includes four first measuring units 4, two of which are fastened to wheels "W" of front axle "A" and the other two of which are fastened to wheels "W" of rear axle "A", and two second measuring units 5 adapted to define virtual axle "V", which are arranged between front axle "A" and rear axle "A" .

In Figure 7, "SX" indicates the left-hand side of vehicle 1 and "DX" indicates the right-hand side of vehicle 1. In Figure 7 it is also possible to identify the direction of travel of vehicle 1. Illustrated measuring units (4, 5) communicate with processing unit 32 to determine at least the above-mentioned wheel alignment angles. In the illustrated embodiment, said processing unit 32 is incorporated into the left-hand second measuring unit 5.

In more detail, with reference to the two axles "A", i.e. front axle "A" and rear axle "A", which are the real axles of vehicle 1, it is possible to make the following calculations:

$$\texttt{sa3sx + sa3dx - CT1 = } \alpha 3 + \beta 3;$$

vca = ($\alpha$3 + $\beta$3) / 2 (new track variation relating to the real front / rear axles of the vehicle);

casx = sa3sx - vca (with the geometric axis of vehicle 1 used as a reference axis);

cadx = sa3dx - vca (with the geometric axis of vehicle 1 used as a reference axis).

Since it is possible to determine the new track variation, it is also possible to establish the geometric axis of vehicle 1 relative to which the toe-in angles casx, cadx, cpsx and cpdx will be calculated.

Therefore, the next calculations will be omitted, in that they are formulae that are commonly used in all measurement systems currently known in the art, whether using 6-sensor or 8-sensor CCD, 3D and/or touchless technology.

Lastly, in the case of a vehicle 1 having more than two axles "A", i.e. real axles of the vehicle, the procedure can be repeated for additional axles by moving each time only the pair of second measuring units 5 that define said virtual axle "V", or a pair of first measuring units 4 on a common axle "A".

Measurement system 3 according to the present invention, since it comprises at least two second measuring units 5, which in turn comprise a first optical assembly 52 and a second optical assembly 54 advantageously disposed and adjusted at a mutual angle of 90°, makes it possible to relate the position in space of wheels "W" of the left-hand side of vehicle 1 to that of the wheels on the right-hand side of the same vehicle 1 by defining said virtual axle "V". The present solution provides a simplified construction of the first measuring units 4 as already described above, thereby permitting the implementation of a different and more accurate measurement method. Furthermore, the position of virtual axle "V" in the sequence of axles "A" of vehicle 1 is unimportant.

The first measuring units 4 comprised in measurement system 3 according to the present invention are more compact, lighter and easier to secure to wheels "W", since they can be fastened directly to one or more bolts "B" of wheel "W".

Fastening system 44 of the first measuring units 4 features a simple construction and allows the first measuring units 4 to be fastened directly to a head of at least one bolt "B", thus ensuring complete adherence to the wheel's plane and avoiding any problems that might otherwise be caused by possible defects of the wheel rim.

Measurement system 3 according to the present invention is designed in a manner such that the measurements of the wheel alignment of vehicle 1, which may comprise two or more axles "A", make reference to a metrological model constituted by at least three axes or more, because said two second measuring units 5 must be considered in all respects as an additional axle, e.g. a third axle, of vehicle 1, although said second measuring units 5 actually define a virtual axle "V".

Measurement system 3 according to the present invention is easy to set up and use.

The scope of the invention is defined by the claims.

REFERENCE NUMERALS

| Vehicle | 1 |
|---|---|
| Measurement system | 3 |
| Processing unit | 32 |
| Visualization device | 34 |
| First measuring units | 4 |
| Support structure | 40 |
| Printed circuit board | 402 |
| Inclinometer | 41 |
| Optical assembly | 42 |
| Optical target | 43 |
| Fastening system | 44 |
| Fastening members | 440 |
| Encoder | 442 |
| Interface | 45 |
| Second measuring unit | 5 |
| Support structure | 50 |
| Printed circuit board | 502 |
| Inclinometer | 51 |
| First optical assembly | 52 |
| First optical target | 53 |
| Second optical assembly | 54 |
| Second optical target | 55 |
| Interface | 56 |
| Axle | "A" |
| Bolt | "B" |
| Battery | "C" |
| Magnet | "M" |
| Virtual axle | "V" |
| Wheel | "W" |
| Reference plane | "XY" |

**Claims**

1. Measurement system (3) for determining the wheel alignment of a vehicle (1) with at least two axles (A), comprising:

- a plurality of first measuring units (4), each one adapted to be fixed to a wheel (W) of the vehicle (1);
- a processing unit (32) adapted to receive data generated by said plurality of first measuring units (4) and to determine the wheel alignment of the vehicle (1) whereon such first measuring units (4) have been associated; said first measuring units (4) being of the optical type; each one of said first measuring units (4) comprising at least one optical assembly (42);
said measurement system (3) being **characterized in that**:

- it comprises two second measuring units (5) adapted to be placed on a reference plane (XY), whereon the vehicle (1) itself can lie, each one being adapted to be arranged on one side of the vehicle (1);
- said two second measuring units (5) being of the optical type, and each second measuring unit (5) comprising at least two optical assemblies (52, 54), wherein:

  ◦ a first optical assembly (52) being adapted to at least be aligned with another first optical assembly (52) comprised in the other second measuring unit (5), in order to define a virtual axle (V);
  ◦ a second optical assembly (54) being adapted to take measurements relative to a respective first measuring unit (4);

- said processing unit (32) being adapted to receive also the data generated by said second measuring units (5), such data being used for determining the wheel alignment of the vehicle (1).

2. Measurement system according to claim 1, wherein said virtual axle (V) defined by said two second measuring units (5) is adapted to be located between two axles (A) of the vehicle (1).

3. Measurement system (3) according to claim 1 or 2, wherein each first measuring unit (4) comprises a fastening system (44) in turn comprising fastening members (440) adapted to be fastened to the head of at least one bolt (B) adapted to fasten the wheel (W) to a respective hub of the vehicle (1).

4. Measurement system (3) according to claim 1 or 2, wherein each first measuring unit (4) comprises a single optical assembly (42).

5. Measurement system (3) according to one of the preceding claims, wherein both said first measuring units (4) and said second measuring units (5) are powered by a rechargeable battery (C) enclosed in a respective support structure (40, 50).

6. Measurement system (3) according to one of the preceding claims, wherein each first measuring unit (4) comprises:

- a support structure (40);
- a printed circuit board (402), mechanically connected to said support structure (40), to which said optical assembly (42) is electrically connected;
- an inclinometer (41), electrically connected to said printed circuit board (402), adapted to determine the inclination of said first measuring unit (4);
- a fastening system (44), mechanically connected to said support structure (40), adapted to allow the first measuring unit (4) to be removably fastened to a wheel (W) of the vehicle (1);
- an interface (45), electrically connected to said printed circuit board (402), adapted to interface with the user while setting up and/or using the first measuring unit (4);
- at least one battery (C), electrically connected to said printed circuit board (402), positioned in said support structure (40);
- an optical target (43), adapted to be framed by at least one optical assembly (42, 54) of another measuring unit (4, 5) for the execution of the measurements.

7. Measurement system (3) according to claim 6, wherein:

- said optical assembly (42) is a two-dimensional camera;
- said inclinometer (41) is at least a dual-axis inclinometer;
- said interface (45) comprises a keyboard, having one or more keys, and one or more visual feedback elements adapted to provide visual feedback about the state of the individual first measuring unit (4);
- said single optical target (43) comprising a plurality of LED sources arranged in space according to a known geometric shape.

8. Measurement system (3) according to one of the preceding claims, wherein each second measuring unit (5) comprises:

- a support structure (50);
- a printed circuit board (502), mechanically connected to said support structure (50), to which said two optical assemblies (52, 54) are electrically connected;
- a first optical target (53) adapted to be framed by the first optical assembly (52) of the other second measuring unit (5) at least for defining said virtual axle (V);
- an inclinometer (51), electrically connected to said printed circuit board (502), adapted to determine the inclination of said second measuring unit (5);
- a second optical target (55), adapted to be framed by at least one optical assembly (42) of a first measuring unit (4) for the execution of the measurements;
- an interface (56), electrically connected to said printed circuit board (502), adapted to interface with the user while setting up and/or using the second measuring unit (5);
- at least one rechargeable battery (C) electrically connected to said printed circuit board (502), positioned in said support structure (50).

9. Measurement system (3) according to claim 8, wherein:

   - each optical assembly (52, 54) is a two-dimensional camera;
   - said inclinometer (51) is at least a dual-axis inclinometer;
   - said interface (56) comprises a keyboard, having one or more keys, and one or more visual feedback elements adapted to provide visual feedback about at least the state of the individual second measuring unit (5);
   - each optical target (53, 55) comprises a plurality of LED sources arranged in space according to a known geometric shape.

10. Measurement method for determining the wheel alignment of a vehicle (1) with two or more axles (A) and with four or more wheels (W), comprising the following steps:

    - providing a measurement system (3) according to claim 1;
    - fastening a first measuring unit (4) to each wheel (W) of the vehicle (1);
    - positioning said second measuring units (5) on a reference plane (XY) whereon the vehicle (1) can lie;
    - aligning said two second measuring units (5) in order to define a virtual axle (V);
    - executing a run-out procedure for each wheel by means of said first measuring units (4), determining the vertical run-out and the horizontal run-out;
    - determining the horizontal and vertical angles of the first measuring units (4) positioned on a first axle (A) and of the two second measuring units (5),
    - calculating the total toe-in, the alignment angles and the track variation corresponding to the angles determined in the previous step;
    - determining the horizontal and vertical angles of the first measuring units (4) positioned on a first axle (A) and of the first measuring units (4) positioned on a second axle (A) ;
    - calculating the total toe-in, the alignment angles and the track variation corresponding to the real vehicle (1).

**Patentansprüche**

1. Messsystem (3) zur Bestimmung der Achsvermessung eines Fahrzeugs (1) mit mindestens zwei Achsen (A), umfassend:

   - eine Vielzahl von ersten Messeinheiten (4), dazu eingerichtet um jeweils an einem Rad (W) des Fahrzeugs (1) befestigt werden zu können;
   - eine Verarbeitungseinheit (32), die dazu eingerichtet ist, dass sie von der Vielzahl der ersten Messeinheiten (4) erzeugte Daten empfängt und die Radausrichtung des Fahrzeugs (1) bestimmt, dem diese ersten Messeinheiten (4) zugeordnet sind;
   wobei die ersten Messeinheiten (4) vom optischen Typ sind;
   wobei jede der ersten Messeinheiten (4) mindestens eine optische Einheit (42) umfasst;
   wobei das Messsystem (3) **dadurch gekennzeichnet ist, dass**:

      - es zwei zweite Messeinheiten (5) umfasst, die auf einer Bezugsebene (XY) platziert werden können, auf der das Fahrzeug (1) selbst liegen kann, wobei eine dazu eingerichtet ist, auf einer Seite des Fahrzeugs (1) angeordnet zu werden;
      - wobei die beiden zweiten Messeinheiten (5) vom optischen Typ sind und jede zweite Messeinheit (5) mindestens zwei optische Baugruppen (52, 54) umfasst, wobei:

         * eine erste optische Einheit (52) dazu eingerichtet ist, mit zumindest einer anderen ersten optischen Einheit (52), die in der anderen zweiten Messeinheit (5) enthalten ist, ausgerichtet zu werden, um eine virtuelle Achse (V) zu definieren;
         * eine zweite optische Einheit (54), die dazu eingerichtet ist, Messungen relativ zu einer entsprechenden ersten Messeinheit (4) vorzunehmen;

      - wobei die Verarbeitungseinheit (32) dazu eingerichtet ist, dass sie auch die von den zweiten Messeinheiten (5) erzeugten Daten empfängt, wobei diese Daten zur Bestimmung der Radausrichtung des Fahrzeugs (1) verwendet werden.

2. Messsystem nach Anspruch 1, wobei die virtuelle Achse (V), die durch die beiden zweiten Messeinheiten (5) definiert ist, dazu eingerichtet ist, zwischen zwei Achsen (A) des Fahrzeugs (1) angeordnet zu werden.

3. Messsystem (3) nach Anspruch 1 oder 2, wobei jede erste Messeinheit (4) ein Befestigungssystem (44) umfasst, das seinerseits Befestigungselemente (440) umfasst, die dazu eingerichtet ist, an dem Kopf mindestens eines Bolzens (B) befestigt zu werden, der dazu eingerichtet ist, das Rad (W) an einer entsprechenden Nabe des Fahrzeugs (1) zu befestigen.

4. Messsystem (3) nach Anspruch 1 oder 2, wobei jede erste Messeinheit (4) eine einzelne optische Einheit (42) umfasst.

5. Messsystem (3) nach einem der vorhergehenden Ansprüche, wobei sowohl die ersten Messeinheiten (4) als auch die zweiten Messeinheiten (5) von einer wiederaufladbaren Batterie (C) gespeist werden, die in einer jeweiligen Trägerstruktur (40, 50) eingeschlossen ist.

6. Messsystem (3) nach einem der vorhergehenden Ansprüche, wobei jede erste Messeinheit (4) umfasst:

   - eine Stützstruktur (40);
   - eine Leiterplatte (402), die mechanisch mit der Trägerstruktur (40) verbunden ist und mit der die optische Baugruppe (42) elektrisch verbunden ist;
   - einen Neigungsmesser (41), der elektrisch mit der Leiterplatte (402) verbunden ist und dazu eingerichtet ist, die Neigung der ersten Messeinheit (4) zu bestimmen;
   - ein Befestigungssystem (44), das mechanisch mit der Trägerstruktur (40) verbunden ist und das dazu eingerichtet ist, die erste Messeinheit (4) abnehmbar an einem Rad (W) des Fahrzeugs (1) zu befestigen;
   - eine Schnittstelle (45), die elektrisch mit der gedruckten Schaltung (402) verbunden ist und die dazu eingerichtet ist, mit dem Benutzer während des Einrichtens und/oder der Benutzung der ersten Messeinheit (4) in Kontakt zu treten;
   - mindestens eine Batterie (C), die elektrisch mit der Leiterplatte (402) verbunden ist und in der Trägerstruktur (40) angeordnet ist;
   - ein optisches Ziel (43), das dazu eingerichtet ist, von mindestens einer optischen Einheit (42, 54) einer anderen Messeinheit (4, 5) zur Durchführung der Messungen eingerahmt zu werden.

7. Messsystem (3) nach Anspruch 6, wobei:

   - die optische Einheit (42) eine zweidimensionale Kamera ist;
   - der Neigungsmesser (41) mindestens ein zweiachsiger Neigungsmesser ist;
   - die Schnittstelle (45) eine Tastatur mit einer oder mehreren Tasten und ein oder mehrere visuelle Rückmeldeelemente umfasst, die dazu eingerichtet sind, eine visuelle Rückmeldung über den Zustand der einzelnen ersten Messeinheit (4) zu geben;
   - wobei das einzelne optische Ziel (43) eine Vielzahl von LED-Quellen umfasst, die gemäß einer bekannten geometrischen Form im Raum angeordnet sind.

8. Messsystem (3) nach einem der vorhergehenden Ansprüche, wobei jede zweite Messeinheit (5) umfasst:

   - eine Stützstruktur (50);
   - eine Leiterplatte (502), die mechanisch mit der Trägerstruktur (50) verbunden ist und mit der die beiden optischen Baugruppen (52, 54) elektrisch verbunden sind;
   - ein erstes optisches Ziel (53), das dazu eingerichtet ist, von der ersten optischen Einheit (52) der anderen zweiten Messeinheit (5) zumindest zur Definition der virtuellen Achse (V) umrahmt zu werden;
   - einen Neigungsmesser (51), der elektrisch mit der Leiterplatte (502) verbunden ist und dazu eingerichtet ist, die Neigung der zweiten Messeinheit (5) zu bestimmen;
   - ein zweites optisches Ziel (55), das dazu eingerichtet ist, von mindestens einer optischen Einheit (42) einer ersten Messeinheit (4) für die Durchführung der Messungen eingerahmt zu werden;
   - eine Schnittstelle (56), die elektrisch mit der gedruckten Schaltung (502) verbunden ist und die dazu eingerichtet ist, mit dem Benutzer während der Einrichtung und/oder der Verwendung der zweiten Messeinheit (5) zusammenzuarbeiten;
   - mindestens eine wiederaufladbare Batterie (C), die elektrisch mit der Leiterplatte (502) verbunden und die in der Trägerstruktur (50) angeordnet ist.

9. Messsystem (3) nach Anspruch 8, wobei:

- jede optische Einheit (52, 54) eine zweidimensionale Kamera ist;
- der Neigungsmesser (51) mindestens ein zweiachsiger Neigungsmesser ist;
- die Schnittstelle (56) eine Tastatur mit einer oder mehreren Tasten und ein oder mehrere visuelle Rückmeldungselemente umfasst, die dazu eingerichtet sind, eine visuelle Rückmeldung über mindestens den Zustand der einzelnen zweiten Messeinheit (5) zu geben;
- jedes optische Ziel (53, 55) eine Vielzahl von LED-Quellen umfasst, die gemäß einer bekannten geometrischen Form im Raum angeordnet sind.

10. Messverfahren zur Bestimmung der Achsvermessung eines Fahrzeugs (1) mit zwei oder mehr Achsen (A) und mit vier oder mehr Rädern (W), umfassend die folgenden Schritte:

- Bereitstellen eines Messsystems (3) nach Anspruch 1;
- Befestigen einer ersten Messeinheit (4) an jedem Rad (W) des Fahrzeugs (1);
- Positionieren der zweiten Messeinheiten (5) auf einer Bezugsebene (XY), auf der das Fahrzeug (1) liegen kann;
- Ausrichten der beiden zweiten Messeinheiten (5), um eine virtuelle Achse (V) zu definieren;
- Ausführen eines Rundlaufverfahrens für jedes Rad mit Hilfe der ersten Messeinheiten (4), wobei der vertikale Rundlauf und der horizontale Rundlauf bestimmt werden;
- Bestimmen der horizontalen und vertikalen Winkel der ersten Messeinheiten (4), die auf einer ersten Achse (A) positioniert sind, und der beiden zweiten Messeinheiten (5),
- Berechnen der gesamten Vorspur, der Ausrichtungswinkel und der Spurabweichung entsprechend den im vorherigen Schritt ermittelten Winkeln;
- Bestimmen der horizontalen und vertikalen Winkel der ersten Messeinheiten (4), die auf einer ersten Achse (A) positioniert sind, und der ersten Messeinheiten (4), die auf einer zweiten Achse (A) positioniert sind;
- Berechnen der gesamten Vorspur, der Ausrichtungswinkel und der Spurabweichung, entsprechend dem realen Fahrzeug (1).

**Revendications**

1. Système de mesure (3) pour déterminer l'alignement des roues d'un véhicule (1) avec au moins deux essieux (A), comprenant :

- une pluralité de premières unités de mesure (4), chacune étant adaptée pour être fixée à une roue (W) du véhicule (1) ;
- une unité de traitement (32) adaptée pour recevoir des données générées par ladite pluralité de premières unités de mesure (4) et pour déterminer l'alignement des roues du véhicule (1) auxquelles de telles premières unités de mesure (4) ont été associées ; lesdites premières unités de mesure (4) étant du type optique ; chacune desdites premières unités de mesure (4) comprenant au moins un ensemble optique (42) ;

ledit système de mesure (3) étant **caractérisé en ce que** :

- il comprend deux secondes unités de mesure (5) adaptées pour être placées sur un plan de référence (XY), sur lequel le véhicule (1) lui-même peut se trouver, chacune étant adaptée pour être agencée sur un côté du véhicule (1) ;
- lesdites deux secondes unités de mesure (5) étant du type optique, et chaque seconde unité de mesure (5) comprenant au moins deux ensembles optiques (52, 54), dans lequel :

  o un premier ensemble optique (52) est adapté pour au moins être aligné avec un autre premier ensemble optique (52) compris dans l'autre seconde unité de mesure (5), afin de définir un essieu virtuel (V) ;
  o un second ensemble optique (54) est adapté pour prendre des mesures par rapport à une première unité de mesure respective (4) ;

- ladite unité de traitement (32) étant adaptée pour recevoir également les données générées par lesdites secondes unités de mesure (5), de telles données étant utilisées pour déterminer l'alignement des roues du véhicule (1).

**2.** Système de mesure selon la revendication 1, dans lequel ledit essieu virtuel (V) défini par lesdites deux secondes unités de mesure (5) est adapté pour être situé entre deux essieux (A) du véhicule (1).

**3.** Système de mesure (3) selon la revendication 1 ou 2, dans lequel chaque première unité de mesure (4) comprend un système de fixation (44) comprenant à son tour des éléments de fixation (440) adaptés pour être fixés à la tête d'au moins un boulon (B) adapté pour fixer la roue (W) à un moyeu respectif du véhicule (1).

**4.** Système de mesure (3) selon la revendication 1 ou 2, dans lequel chaque première unité de mesure (4) comprend un ensemble optique unique (42).

**5.** Système de mesure (3) selon l'une quelconque des revendications précédentes, dans lequel à la fois lesdites premières unités de mesure (4) et lesdites secondes unités de mesure (5) sont alimentées par une batterie rechargeable (C) enfermée dans une structure de support respective (40, 50).

**6.** Système de mesure (3) selon l'une des revendications précédentes, dans lequel chaque première unité de mesure (4) comprend :

- une structure de support (40) ;
- une carte de circuit imprimé (402), connectée mécaniquement à ladite structure de support (40), à laquelle ledit ensemble optique (42) est connecté électriquement ;
- un inclinomètre (41), connecté électriquement à ladite carte de circuit imprimé (402), adapté pour déterminer l'inclinaison de ladite première unité de mesure (4) ;
- un système de fixation (44), relié mécaniquement à ladite structure de support (40), adapté pour permettre à la première unité de mesure (4) d'être fixée de manière amovible à une roue (W) du véhicule (1) ;
- une interface (45), connectée électriquement à ladite carte de circuit imprimé (402), adaptée pour interfacer avec l'utilisateur lors de la configuration et/ou de l'utilisation de la première unité de mesure (4) ;
- au moins une batterie (C), connectée électriquement à ladite carte de circuit imprimé (402), positionnée dans ladite structure de support (40) ;
- une cible optique (43), adaptée pour être cadrée par au moins un ensemble optique (42, 54) d'une autre unité de mesure (4, 5) pour l'exécution des mesures.

**7.** Système de mesure (3) selon la revendication 6, dans lequel :

- ledit ensemble optique (42) est une caméra bidimensionnelle ;
- ledit inclinomètre (41) est au moins un inclinomètre biaxial ;
- ladite interface (45) comprend un clavier, ayant une ou plusieurs touches, et un ou plusieurs éléments de rétroaction visuelle adaptés pour fournir une rétroaction visuelle sur l'état de la première unité de mesure individuelle (4) ;
- ladite cible optique unique (43) comprenant une pluralité de sources DEL agencées dans l'espace selon une forme géométrique connue.

**8.** Système de mesure (3) selon l'une quelconque des revendications précédentes, dans lequel chaque seconde unité de mesure (5) comprend :

- une structure de support (50) ;
- une carte de circuit imprimé (502), reliée mécaniquement à ladite structure de support (50), à laquelle lesdits deux ensemble optiques (54) sont connectés électriquement ;
- une première cible optique (53) adaptée pour être cadrée par le premier ensemble optique (52) de l'autre seconde unité de mesure (5) au moins pour définir ledit essieu virtuel (V) ;
- un inclinomètre (51), connecté électriquement à ladite carte de circuit imprimé (502), adapté pour déterminer l'inclinaison de ladite seconde unité de mesure (5) ;
- une seconde cible optique (55), adaptée pour être cadrée par au moins un ensemble optique (42) d'une première unité de mesure (4) pour l'exécution des mesures ;
- une interface (56), connectée électriquement à ladite carte de circuit imprimé (502), adaptée pour interfacer avec l'utilisateur lors de la configuration et/ou de l'utilisation de la seconde unité de mesure (5) ;
- au moins une batterie rechargeable (C), connectée électriquement à ladite carte de circuit imprimé (502), positionnée dans ladite structure de support (50) ;

9. Système de mesure (3) selon la revendication 8, dans lequel :

   - chaque ensemble optique (52, 54) est une caméra bidimensionnelle ;
   - ledit inclinomètre (51) est au moins un inclinomètre biaxial ;
   - ladite interface (56) comprend un clavier, ayant une ou plusieurs touches, et un ou plusieurs éléments de rétroaction visuelle adaptés pour fournir une rétroaction visuelle sur au moins l'état de la première unité de mesure individuelle (5) ;
   - chaque cible optique (55) comprend une pluralité de sources DEL agencées dans l'espace selon une forme géométrique connue.

10. Procédé de mesure pour déterminer l'alignement des roues d'un véhicule (1) avec deux essieux ou plus (A) et avec quatre roues ou plus (W), comprenant les étapes suivantes consistant à :

    - prévoir un système de mesure (3) selon la revendication 1 ;
    - fixer une première unité de mesure (4) à chaque roue (W) du véhicule (1) ;
    - positionner lesdites secondes unités de mesure (5) sur un plan de référence (XY) sur lequel le véhicule (1) peut se trouver ;
    - aligner lesdites deux secondes unités de mesure (5) afin de définir un essieu virtuel (V) ;
    - exécuter une procédure de battement pour chaque roue au moyen desdites premières unités de mesure (4), déterminer le battement vertical et le battement horizontal ;
    - déterminer les angles horizontaux et verticaux des premières unités de mesure (4) positionnées sur un premier essieu (A) et des deux secondes unités de mesure (5),
    - calculer le pincement total, les angles d'alignement et la variation de piste correspondant aux angles déterminés à l'étape précédente ;
    - déterminer les angles horizontaux et verticaux des premières unités de mesure (4) positionnées sur un premier essieu (A) et des premières unités de mesure (4) positionnées sur un second essieu (A) ;
    - calculer le pincement total, les angles d'alignement et la variation de piste correspondant au véhicule réel (1).

## Fig. 1

## Fig. 3

Fig. 2A

Fig. 2B

Fig. 2C

Fig. 4A

Fig. 4B

Fig. 4C

Fig. 4D

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5748301 A
- US 5636016 A